(19)

**Europäisches Patentamt**
**European Patent Office**
**Office européen des brevets**

(11) **EP 4 231 203 A1**

(12) **EUROPEAN PATENT APPLICATION**

(43) Date of publication:
**23.08.2023 Bulletin 2023/34**

(21) Application number: **23150415.0**

(22) Date of filing: **05.01.2023**

(51) International Patent Classification (IPC):
**G06N 3/0495** (2023.01)    **G06N 3/082** (2023.01)

(52) Cooperative Patent Classification (CPC):
**G06N 3/082; G06N 3/0495**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.02.2022 KR 20220020308**

(71) Applicants:
- **Samsung Electronics Co., Ltd.**
  **Suwon-si 16677 (KR)**
- **Seoul National University R & DB Foundation**
  **Seoul 08826 (KR)**

(72) Inventors:
- **KIM, Jongseok**
  **Suwon-si 16678 (KR)**
- **JEONG, Yeonwoo**
  **Seoul 08826 (KR)**
- **SONG, Hyun Oh**
  **Seoul 08826 (KR)**
- **SON, Changyong**
  **Suwon-si 16678 (KR)**

(74) Representative: **Arnold & Siedsma**
**Bezuidenhoutseweg 57**
**2594 AC The Hague (NL)**

(54) **METHOD AND APPARATUS WITH PRUNING BACKGROUND**

(57)    A method and apparatus with pruning are disclosed. A method is performed by an apparatus including a processor, the method includes determining weight importance of a trained neural network, receiving a constraint condition related to an operation resource, and determining, in accordance with the constraint condition, a pruning mask for maximizing the weight importance of the trained neural network.

FIG.4

EP 4 231 203 A1

**Description**

BACKGROUND

1. Field

The following description relates to a method and apparatus with pruning.

2. Description of Related Art

An artificial neural network apparatus often requires a large amount of processing power to be able to handle complex input data (hereafter, "neural network" refers to artificial neural networks). Increasing the learning capacity of a neural network may involve increasing the complexity of the connectivity within the neural network. While the accuracy of old learning data may increase, confidence in estimated value of newly learned data may decrease. That is, an overfitting issue may occur. Also, increasing the complexity of a neural network may excessively increase its memory allocation, which creates issues in terms of miniaturization and commercialization.

Accordingly, there is a need to generally maintain performance of a neural network while reducing the cost of implementing the neural network.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method is performed by an apparatus including a processor, the method includes determining weight importance of a trained neural network, receiving a constraint condition related to an operation resource, and determining, in accordance with the constraint condition, a pruning mask for maximizing the weight importance of the trained neural network.

The determining of the pruning mask may include determining a pruning binary vector of an input channel with respect to pruning, and determining a spatial pruning binary vector of an output channel with respect to the pruning.

The pruning of the neural network may include pruning weights of an input channel, with respect to the pruning, based on a determined pruning binary vector of the input channel, and pruning weights in a spatial dimension of an output channel based on a determined spatial pruning binary vector of the output channel.

The determining of the weight importance may include expressing the weight importance as at least one of a pruning binary vector of an input channel, with respect to the pruning, or a spatial pruning binary vector of an output channel, with respect to the pruning, and the receiving of the constraint condition may include expressing the constraint condition as at least one of the pruning binary vector of the input channel or the spatial pruning binary vector of the output channel.

The determining of the pruning mask may include, in accordance with the constraint condition, expressing an optimization equation for maximizing the weight importance of the neural network as at least one of the pruning binary vector of the input channel and the spatial pruning binary vector of the output channel.

The determining of the pruning mask may include determining the pruning mask corresponding to the optimization equation based on a binary vector optimization algorithm.

The determining of the weight importance may include determining the weight importance based an absolute value of a weight of the neural network and/or an absolute value of a gradient of an error.

In one general aspect, an electronic apparatus includes a processor, and a memory storing instructions executable by the processor, wherein the processor is configured to, in response to executing the instructions, determine weight importance of a trained neural network, receive a constraint condition related to an operation resource, and determine, in accordance with the constraint condition, a pruning mask for maximizing the weight importance of the trained neural network.

The processor may be further may be configured to determine a pruning binary vector of an input channel, and determine a spatial pruning binary vector of an output channel.

The processor may be further may be configured to prune the neural network based on the pruning mask.

The processor may be configured to perform inference based on the pruned neural network.

The processor may be further may be configured to control the electronic apparatus to prune weights of an input channel based on a determined pruning binary vector of the input channel, and prune weights in a spatial dimension of an output channel based on a determined spatial pruning binary vector of the output channel.

The processor may be configured to express the weight importance as at least one of a pruning binary vector of an input channel or a spatial pruning binary vector of an output channel, and express the constraint condition as at least one of the pruning binary vector of the input channel or the spatial pruning binary vector of the output channel.

The processor may be further configured to, in accordance with the constraint condition, to express an optimization equation for maximizing the weight importance of the neural network as at least one of the pruning binary vector of the input channel or the spatial pruning binary vector of the output channel.

The processor may be further may be configured to determine the pruning mask corresponding to the optimization equation based on a binary vector optimization algorithm.

The processor may be further may be configured to determine the weight importance based on an absolute value of a weight of the neural network and/or an absolute value a gradient of an error.

The weight importance may include a value corresponding to one or more weights in the trained neural network, and wherein the value may correspond to the one or more weight's effect on accuracy of the trained neural network.

In one general aspect, a method is performed by a processor, and the method includes receiving a constraint condition, the constraint condition indicating a constraint to be complied with when a corresponding trained neural network performs an inference, based on the constraint condition and the trained neural network, determining a pruning mask that satisfies the constraint condition for the trained neural network based on a weight feature of the neural network, and using the pruning mask to prune a weight of an output channel of the trained neural network.

The pruning mask may be determined based on an input pruning vector corresponding an input channel, with respect to the pruning, of a layer of the neural network and an output pruning vector corresponding to an output channel of the layer of the neural network.

The weight feature may be based on one or more weights of the trained neural network.

The weight feature may correspond to an effect of the weights on prediction accuracy of the trained neural network.

The neural network may include a convolutional neural network, wherein the layer may include a convolution layer of the convolutional neural network.

Determining the pruning mask may include executing an optimization algorithm constrained by the constraint condition and the weight condition.

A non-transitory computer-readable storage medium may store instructions that, when executed by a processor, cause the processor to perform any of the method.

Other features and aspects will be apparent from the following detailed description, the drawings, and the claims.

BRIEF DESCRIPTION OF THE DRAWINGS

FIG. 1 illustrates an example of an operation performed in a neural network, according to one or more embodiments.

FIG. 2A illustrates an example of neural network pruning, according to one or more embodiments.

FIG. 2B illustrates an example of neural network pruning, according to one or more embodiments.

FIG. 3A illustrates an example of a channel pruning method, according to one or more embodiments.

FIG. 3B illustrates an example of a pruning method, according to one or more embodiments.

FIG. 4 illustrates an example of a pruning method, according to one or more embodiments.

FIG. 5 illustrates an example of a weight pruned by a method, according to one or more embodiments.

FIG. 6 illustrates an example of a hardware configuration of an electronic apparatus, according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

The examples may be implemented as various types of products, such as, for example, a personal computer (PC), a laptop computer, a tablet computer, a smartphone, a television (TV), a smart home appliance, an intelligent vehicle, a kiosk, a wearable device, etc. Hereinafter, examples will be described in detail with reference to the accompanying drawings. In the drawings, like reference numerals are generally used for like elements.

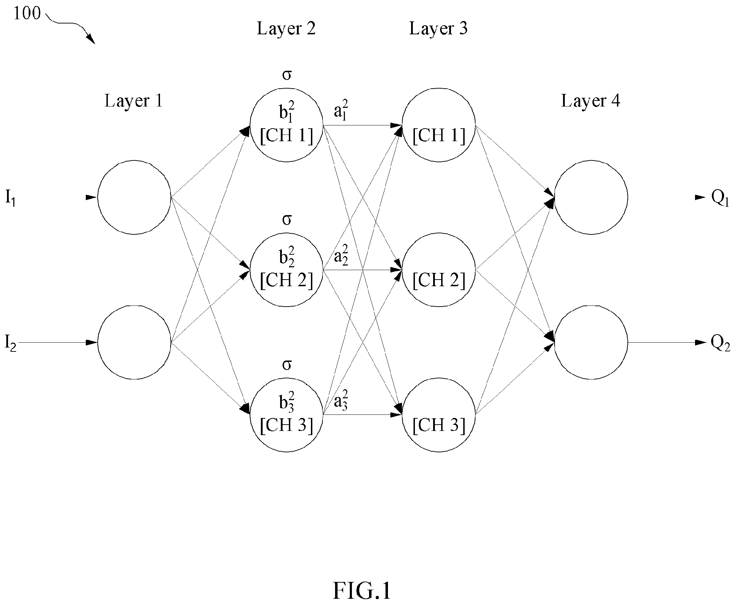

FIG. 1 illustrates an example of an operation performed in a neural network, according to one or more embodiments.

A neural network is a computational system that models an information processing method of a human brain. A deep neural network (DNN) may include many layers, for example, an input layer that receives input data, an output layer that outputs a result derived through input data-based prediction based on learning, and one or more hidden layers between the input layer and the output layer. Convolutional neural networks (CNNs), recurrent neural networks (RNNs), and the like, are examples of DNNs used to process information.

A method of training a neural network may be referred to as deep learning. Various algorithms, for example, a CNN scheme and an RNN scheme, may be used for deep learning. Training the artificial neural network may involve determining and updating or adjusting weights between layers, and may further or alternatively include determining and updating respective biases applied to nodes of the neural network. For example, weights of respective connections between nodes of adjacent layers may be updated during training.

Hierarchical structures and layers, including weight and bias between a plurality of neurons may be collectively referred to as connectivity of the neural network. Training a neural network may involve constructing and learning the connectivity.

Referring to FIG. 1, an example neural network 100 may include an input layer (Layer 1), hidden layers (e.g., Layer 2 and Layer 3), and an output layer (Layer 4). The neural network may perform an operation based on received input data (e.g., I1 and I2) and generate output data (e.g., O1 and O2). As noted above, the DNN may be a CNN, an RNN, a deep belief network (DBN), a restricted Boltzmann machine (RBM), or the like, but examples are not limited thereto.

In the case of a CNN, a CNN uses a convolution operation, which is useful, for example, to find a pattern, recognize an object, face, or scene, etc., in an image. In a CNN, a filter may perform a convolution operation while traversing pixels or data of an input image at a predetermined interval to extract features of the image and generate a feature map or an activation map using a result of the convolution operation. The filter may include, for example, or weight or non-weight parameters for finding the features of an image. An example filter may also be referred to as a kernel, described below (in some cases, a filter may be multiple kernels to be convolved over respective input channels). When a filter is applied to an input image, the interval at which the filter moves across (or traverses) the pixels or data of the input image may be referred to as a "stride". For example, when a stride is "2", the filter may perform the convolution operation, move 2 spaces in the pixels or data of the input image, and perform the convolution operation again, repeating until the input image has been processed. This example may be expressed as "stride parameter = 2".

A feature map may be derived from an original image (or a feature map from a preceding layer) through convolution operation, and is typically expressed in the form of a matrix or tensor. In addition, the term "activation map" may refer to a result obtained by applying an activation function to results of weightings of the filter (for example) applied to an input feature map or previous-layer feature map. In other words, the activation map may correspond to each output result of layers of the neural network that performs such activation functions. Where "activation map" is used herein, such description may apply equally to a "feature map", unless the context suggests otherwise. Activation maps may also be referred to as a feature vectors, feature volumes or tensors generated by a layer that imposes an activation (e.g., imposes a non-linearity into the layer results).

A shape of data finally output from the CNN may change depending on, for example, a filter size, stride, a number of filters, whether to padding is applied, and/or max pooling size applied subsequent to the convolution operation, and the like. In a convolution layer, a spatial size of a feature map resulting from application of a filter is typically less than the spatial size of data inputted to the corresponding convolution layer due to the convolution involving the filter and the strides.

Padding may be predetermined values corresponding to a designated number of pixels (e.g., "2") added around borders of a set of data, typically a matrix. For example, when padding is set to "2", a predetermined value (e.g., "0") may be added to the data to add a 2-pixel thick border of a matrix of input data, e.g., a feature map outputted from a previous convolution player may have a size of $32 \times 32$, for example, before the padding is applied. Accordingly, when the padding is set to "2", an increased size of the matrix of data may be $36 \times 36$. This example may be expressed as "padding parameter = 2". As such, a spatial size of output data in a convolution layer may be adjusted through padding.

For example, if padding is not used, data may have a decrease in its spatial size while passing through a convolution layer, and accordingly, information around corners and/or image-edges of the data may be lost or diminished. Therefore, the padding may be used to prevent the information around the corners of the data from being lost or to match a spatial size of an output in the convolution layer to a spatial size of input data expected by a next convolution layer.

When the neural network 100 is implemented as a DNN architecture, the neural network 100 may include more layers capable of processing valid information, and thus the neural network 100 may process more complex data sets compared to a neural network that includes only a single layer. FIG. 1 illustrates a neural network 100 including four layers, but this is merely an example, and the neural network 100 may include fewer or more layers or fewer or more channels. That is, the neural network 100 may include layers of various structures different from the one illustrated in FIG. 1.

Each of the layers included in the neural network 100 may include many nodes, which may be organized according to a plurality of channels. Each node may also be referred to as a processing element (PE), a unit, or other similar terms. For explanatory purposes, where each channel of a layer includes one node, as illustrated in FIG. 1, Layer 1 may include a single channel (node), and each of Layer 2 and Layer 3 may include three channels. However, this is merely an example, and each of the layers included in the neural network 100 may include various numbers of channels. For example, in a CNN, an input image may have a number of channels (e.g., color channels), and a volume outputted by a given layer may have a number of channels (e.g., feature maps) that may correspond to a number of filters in that given layer.

Channels included in each of the layers of the neural network 100 may be interconnected to process data. For example, a channel output by one layer may be received by the next layer for operations with respect to that channel in the next layer.

An input and an output of each of the channels may be referred to as an input activation and an output activation, respectively. An activation may be both an output of one channel at a given layer and a parameter corresponding to one of the input the channel correspondingly included in a subsequent layer. Meanwhile, the channels at a given layer may determine their respective output activations based on activations, weights, and a bias received from (or corresponding to) channels in a previous layer. Using the above explanatory example when each channel of two layers includes a single node, a weight may be a parameter associated with a connection between a channel's node at a given layer and a channel's node at a following layer. The weight may be applied to an output activation from the channel's node at the given layer to calculate an output activation for the channel's node in the following layer, generally, in combination with output activations (and respectively associated weights) from other channel's node in the given layer that are connected to the channel's node in the following layer.

Convolutional layer operations of each of the channels of the values of the input and corresponding filter weights may be processed as a computational unit or processing. For example, in a neural network, when $\sigma$ is an activation function, $w_{jk}^i$ is a weight from a k-th node included in an i-1th layer to a j-th node included in an i-th layer, $b_j^i$ is a bias value of the j-th node included in the i-th layer, and aj is an activation of the j-th node of the i-th layer, the activation aj may be expressed as in Equation 1 below.

Equation 1

$$a_j^i = \sigma\left(\sum_k\left(w_{jk}^i \times a_k^{i-1}\right) + b_j^i\right)$$

As illustrated in FIG. 1, an activation of a first channel (CH 1) of a first layer (Layer 1) may be represented as $a_1^1$. In addition, $a_1^2$ may have a value of $a_1^2 = \sigma(w_{1,1}^2 \times a_1^1 + w_{1,2}^2 \times a_2^1 + b_1^2)$ according to Equation 1. The aforementioned Equation 1 is provided as an example only to describe an activation, a weight, and a bias used for the neural network 100 to process data. The activation may be a value obtained by allowing a weighted sum of the activations received from the previous layer to pass through an activation function, such as a sigmoid function or a rectified linear unit (ReLU) function.

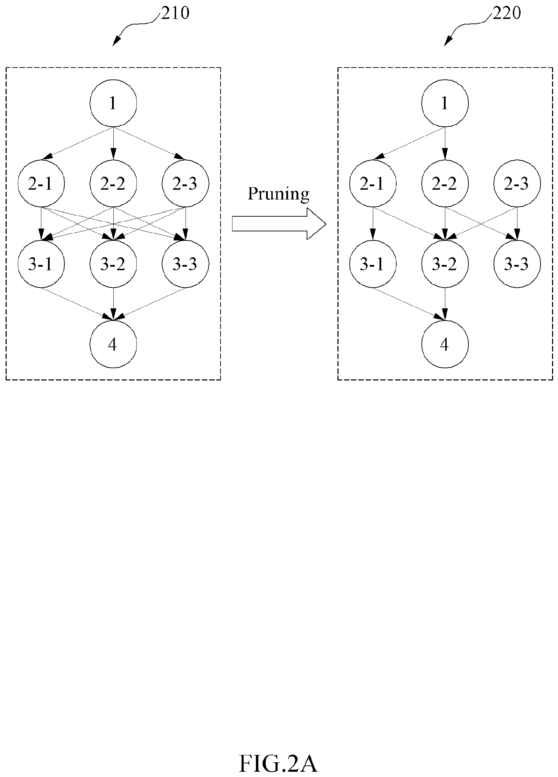

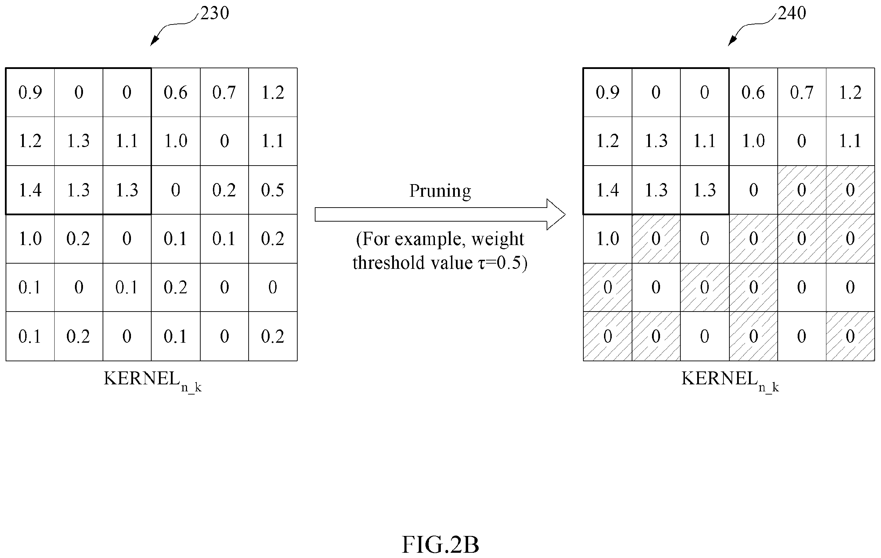

FIGS. 2A and 2B illustrate an example of neural network pruning, according to one or more embodiments.

As illustrated in FIG. 2A, neural network 210 is a neural network before pruning, and neural network 220 is the neural network 210 after pruning thereof.

For example, in the pre-pruning neural network 210, a connected relationship exists between all paired node combinations included in any two adjacent layers in the neural network 210, i.e., the neural network 210 is fully connected. Particularly, since the example neural network 210 is a fully-connected neural network, weights that denote connection strengths between two nodes belonging to respective adjacent layers included in the neural network 210 may be greater than "0". Accordingly, when there is full connectivity between neurons of all adjacent layers, the overall complexity of the neural network is maximal. In such fully or highly connected neural networks, it is common for the accuracy and reliability of a prediction result of a neural network to decrease due to overfitting. To reduce the complexity of the neural network, pruning may be performed on the neural network.

Neural network pruning may be a process that, for example, as illustrated in FIG. 2A, is determined based on any weights (or absolute values thereof) between any nodes connected in the neural network 210 being less than or equal to a predetermined threshold value, weakens or removes the connectivity between the corresponding nodes. Hereinafter, for the convenience of description, "neural network pruning" will also be referred to as "pruning", and may to refer to different pruning techniques or combinations thereof. Although pruning thresholds may be described herein as "predetermined", thresholds may also be determined dynamically based on external inputs, state of the neural network, learning/feedback, etc. Description herein of predetermined thresholds is applicable to dynamically determined thresholds, i.e., thresholds may be determined at any time (and based on any information) up to and including when they are used for pruning. As can be seen, "predetermined" means that a threshold is determined any time before it is used for pruning. In some embodiments, thresholds may be complex. For example, a threshold may be a range, Boolean expression, mathematical function, combinations thereof, etc.

For example, when a weight between a node 1 and a node 2-3 in the neural network 210 is less than or equal to a predetermined threshold value, pruning is a process of setting the weight between the node 1 and the node 2-3 in the neural network 210 to "0", for example, to effectively remove connectivity between the node 1 and the node 2-3 as shown in the pruned neural network 220 (in some embodiments, pruning may involve removing or suppressing a connection so that corresponding previously-connected channels/nodes stop exchanging an activation input/output). That is to say, in the pruned neural network 220, connectivity between some nodes in the neural network 210 may be weakened or removed.

Each layer of a neural network may be searched, at any time, to determine nodes or connections for which pruning is appropriate. Searches for layers and/or weights to be may be performed such that inference with accuracy of the neural network, that is, an output of the neural network, may not be excessively affected. In some embodiments, pruning may be performed as weights are being applied for activation computations, during training, when a neural network is "offline" (e.g., as a maintenance process), and so forth.

While a pruning process is being performed among weights of layers included in the neural network, a connection between nodes which have values that are less than a predetermined weight threshold value may be determined, and a connection relationship between the nodes having such weights may be removed or weakened. As discussed next with reference to FIG. 2B, pruning techniques described herein may be applied to weighted connections of kernels.

Referring to FIG. 2B, a result of performing a pruning process on a $KERNEL_{n\_k}$ 230 (n and k are natural numbers) that is a k-th kernel of an n-th layer in a neural network, is illustrated. As a setting for neural network pruning, for example, a weight threshold value $\tau$ is assumed to be "0.5".

Before pruning, the $KERNEL_{n\_k}$ 230 may have weights of various values. During the pruning process, among weights of the $KERNEL_{n\_k}$ 230, all weights less than or equal to a weight threshold value ($\tau=0.5$) may be pruned to "0", and a pruned $KERNEL_{n\_k}$ 240 may be generated. The pruned $KERNEL_{n\_k}$ 240 may weaken connectivity between nodes of adjacent layers, compared to the $KERNEL_{n\_k}$ 230, and thus, an amount of computational operation between adjacent nodes may be reduced due to some of the weights having a value of "0".

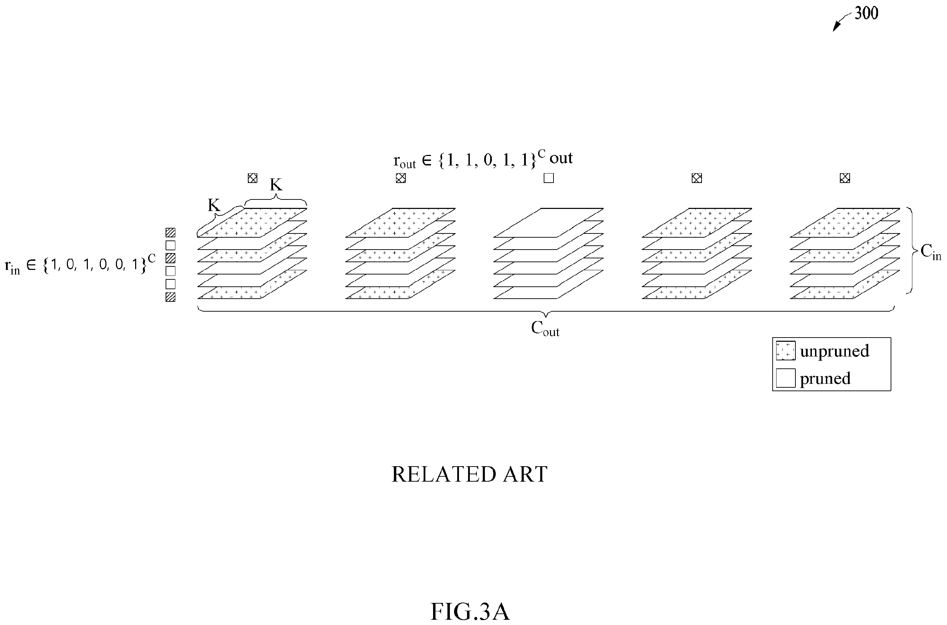

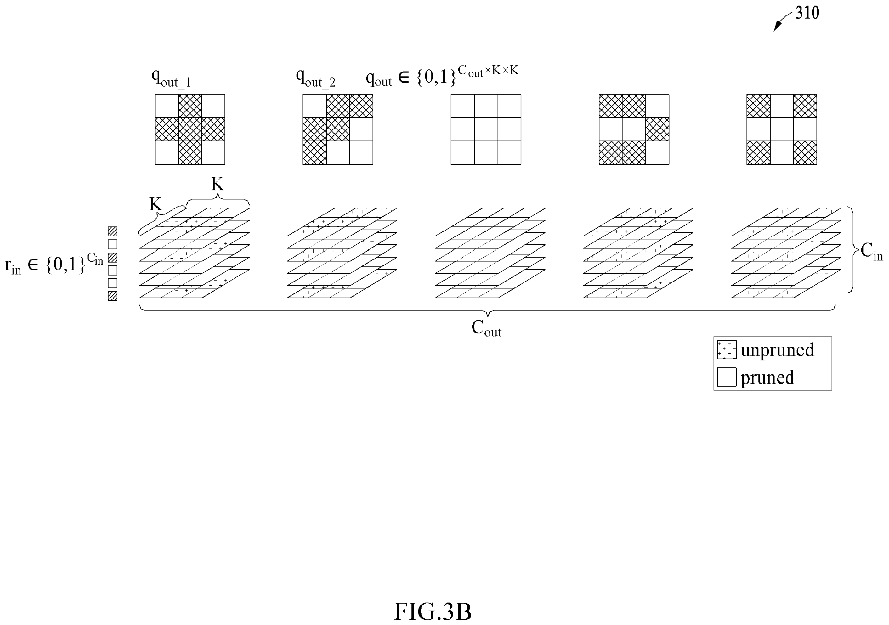

FIG. 3A illustrates an example 300 of a channel pruning method, according to one or more embodiments.

Referring to the example of FIG. 3A, for example, in a corresponding layer of a neural network, a spatial size of a kernel map may be K*K, and with respect to pruning, a number of input channels ($C_{in}$) may be "6", and a number of output channels ($C_{out}$) may be "5". Herein, references to an input channel with respect to pruning are referring to a channel of a kernel (or may refer to the same channel of multiple or all kernels). For example, when an input to a convolution layer includes "6" channels (e.g., 6 feature maps), each kernel of the convolution layer will also have 6 corresponding channels, one for each channel of the input. Similarly, references to an output channel with respect to pruning refer to a kernel among plural kernels, which affects the number of output channels of a convolution layer. For example, when there are "5" kernels, there will be 5 output channels of the convolution layer.

As described next, channel pruning method may involve performing pruning for each input channel based on an input channel pruning binary vector and for each output channel using an output channel pruning binary vector. The input channel pruning binary vector may be a binary vector indicating whether a weight of an input channel is pruned and may be expressed as $r_{in} \in \{0,1\}^{Cin}$, Particularly, based on a determination to prune a given input channel, a vector value (of the input channel pruning binary vector) corresponding to the given input channel may be expressed as "0", and conversely, based on a determination not to prune a given input channel, the vector value corresponding to the given channel may be expressed as "1" in the input channel pruning binary vector. For example, as illustrated in FIG. 3A, based on a determination to prune the second, fourth, and fifth input channels, the input channel pruning binary vector may be expressed as in Equation 2 below.

## Equation 2

$$r_{in} = (1, 0, 1, 0, 0, 1)$$

As shown in FIG. 3A, the example input channel pruning binary vector represented by Equation 2 may be applied to the "6" input channels to prune channels therein.

The output channel pruning binary vector may be a binary vector indicating which of the "5" output channels (i.e., a particular kernel) are to be pruned, and may be expressed as $r_{out} \in \{0,1\}^{Cout}$, Particularly, based on a determination to fully prune a given output channel (e.g., filter), a vector value corresponding to the given channel may be expressed as "0", and conversely, based on a determination not to prune a given output channel, the vector value corresponding to the given output channel may be expressed as "1". For example, as illustrated in FIG. 3A, based on a determination to prune the third output channel, the output channel pruning binary vector may be expressed as in Equation 3 below.

## Equation 3

$$r_{out} = (1, 1, 0, 1, 1)$$

As shown in FIG. 3A, the example output channel pruning binary vector represented by Equation 3 may be applied to each set of the "5" kernels of the represented layer to prune output channels. As shown in the example of FIG. 3A, the third kernel is pruned. Consequently, the layer represented in FIG. 3A may only output an entire corresponding feature map of zero values or only "4" feature maps rather than "5". When pruning is performed by both the input pruning binary vector and the output pruning binary vector, the "4" filters are only convolved over the first, third, and sixth input channels.

Although channel pruning may be performed for each input channel, there may be practical limits on the sophistication of pruning and a corresponding compression of a network. As described next, according to an example, a pruning method may perform more sophisticated pruning by pruning in a spatial direction of an output channel.

FIG. 3B illustrates an example 310 of a pruning method, according to one or more embodiments.

Referring to FIG. 3B, for example, in a corresponding layer of a neural network, a size of a kernel map may be K*K, a number of input channels ($C_{in}$) of each kernel (corresponding to some number of feature maps of an input to the convolution layer) may be "6", and a number of output channels may ($C_{out}$) may be "5" (e.g., equal to the number of kernels, which results in the same number of output channels).

According to an example, a pruning method may involve performing pruning for each input channel based on an input channel pruning binary vector and an output channel spatial pruning binary vector. The description of the input channel pruning binary vector referring to FIG. 3A may also apply to FIG. 3B, and thus, a duplicate description is omitted. However, pruning described with reference to FIG. 3B may also be performed without using the channel pruning vectors described with reference to FIG. 3A.

As illustrated in FIG. 3B, similar to the example of FIG. 3A, in response to a determination to prune second, fourth, and fifth input channels, an input channel pruning binary vector may be expressed as in Equation 1.

In the example of FIG. 3B, the output channel spatial pruning binary vector may be a binary vector whose elements are binary matrices (in the example of FIG. 3B, the output channel spatial pruning binary vector is a vector containing the "5" depicted 3x3 masks). Each binary matrix indicates which weights of a respective output channel are pruned in a spatial dimension. The output channel spatial pruning binary vector may be expressed as $q_{out} \in \{0,1\}^{C_{out} \times K \times K}$. Here, indicating which weights of an output channel are pruned in a spatial direction or dimension may mean indicating whether a weight is pruned considering even a spatial shape of a kernel map for each output channel.

To elaborate, whether to prune may be determined for each output channel, according to an example as discussed above; however, pruning may be performed for each kernel map element of an output channel, which is an extended way of pruning. For example, in response to a determination to prune first, third, seventh, and ninth elements of the kernel maps in a first output channel, matrix values corresponding to those elements may be expressed as "0". Conversely, based on a determination not to prune second, fourth, fifth, sixth, and eighth elements of the kernel maps in the first output channel, matrix values corresponding to those elements may be expressed as "1", and in this case, the first element of the output channel spatial pruning binary vector may be expressed as in Equation 4 below (and as depicted by the leftmost 3x3 mask shown in FIG. 3B).

## Equation 4

$$q_{out\_1} = \begin{pmatrix} 0 & 1 & 0 \\ 1 & 1 & 1 \\ 0 & 1 & 0 \end{pmatrix},$$

where "out_1" refers to the first output channel.

Similarly, based on a determination to prune first, sixth, eighth, and ninth elements of the kernel maps in a second output channel, matrix values corresponding to those elements may be expressed as "0". Conversely, based on a determination not to prune second, fourth, fifth, sixth, and eighth elements of the kernel maps in the second output channel, matrix values corresponding to a those elements may be expressed as "1", and in this case, the second element (matrix) of the output channel spatial pruning binary vector may be expressed as in Equation 5 below (as depicted by the second-from-the-left 3x3 mask shown in FIG. 3B).

## Equation 5

$$q_{out\_2} = \begin{pmatrix} 0 & 1 & 1 \\ 1 & 1 & 0 \\ 1 & 0 & 0 \end{pmatrix},$$

where "out_2" refers to the second output channel.

In some embodiments, a pruning mask may be determined based on a pruning binary vector of an input channel and a spatial pruning binary vector of an output channel. The pruning mask may be a binary vector indicating whether a corresponding element is pruned and may be expressed as in Equation 6 below.

## Equation 6

$$A = r_{in} \otimes q_{out}$$

According to Equation 6, when either a pruning binary vector of an input channel or a spatial pruning binary vector of an output channel of a predetermined element is "0", the corresponding element may be pruned. Conversely, when both the pruning binary vector of the input channel and the spatial pruning binary vector of the output channel are "1", the corresponding element may not be pruned. Pruning according to an embodiment may involve pruning up to a minimum unit in which an operation can be performed quickly on hardware, such as at a single multiplication operation, or entire groups of multiplication and accumulation operations, for example.

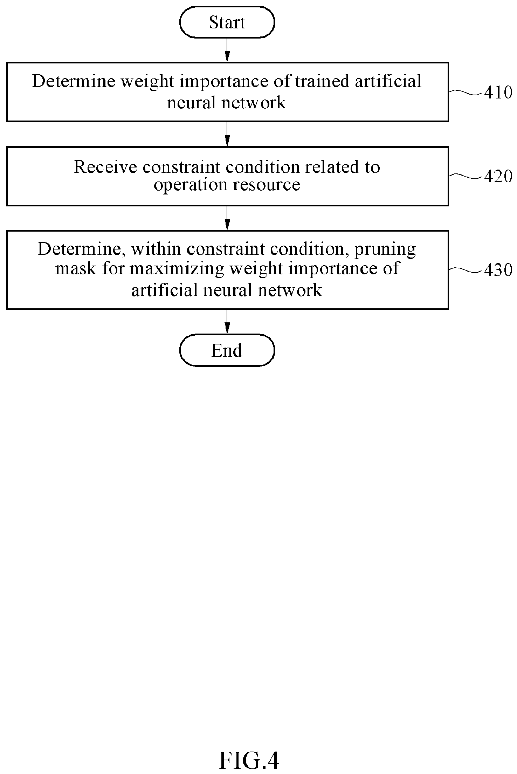

FIG. 4 illustrates an example of a pruning method, according to one or more embodiments.

Operations of FIG. 4 may be performed in the shown order and manner. However, the order of some operations may change, or some of the operations may be omitted. The operations shown in FIG. 4 may be performed sequentially or in parallel. As illustrated in FIG. 4, one or more blocks and a combination thereof may be implemented by a special-purpose hardware-based computer that performs a predetermined function and/or a general-purpose computer as configured by instructions to function as special-purpose hardware.

An apparatus configured to implement embodiments described with reference to FIG. 4 may optimize a pruning mask in a way of maximizing a resource of a weight in accordance with (or as constrained by) an amount of resources indicated by a user or otherwise. For example, the apparatus may predict an estimated inference time, an amount of memory necessary to use a neural network, and/or floating point operations (FLOPs) required for an operation based on weights remaining after pruning using a determined pruning mask (e.g., mask A described above).

Referring to FIG. 4, in operation 410, the apparatus may determine weight importance of a trained neural network. The apparatus may train the neural network by itself or the neural network may already be trained. Training the neural network may expose properties of the neural network to the apparatus.

Thereafter, the apparatus may determine the weight importance of a trained neural network. For example, the apparatus may determine an absolute value of the weight and/or an absolute value of a gradient of an error as the weight importance (or, weight importance may be based on one or more such values). That is to say, a weight importance of a given weight may be any measure of a feature of a trained neural network that indicates the weight's importance with respect to various properties of the network such as prediction accuracy (locally and/or globally), connectivity, or the like. Alternatively, the apparatus may receive a predetermined weight importance of the neural network. An example method of determining weight importance is described below.

In operation 420, the apparatus may receive a constraint condition related to an operation resource. The constraint condition related to the operation resource may be determined based on an amount of memory, FLOPs, and/or time to operate the neural network to perform an inference (i.e., an inference time). For example, if the neural network needs to complete an inference or prediction within a preset time, a corresponding inference time may be a constraint condition. For example, the constraint condition may be a time limit of using a hardware resource such as a processor, supercomputer, or the like.

In operation 420, the apparatus may determine, according to the constraint condition, a pruning mask (or a pruning vector or matrix) for maximizing or improving the weight importance of the neural network. The description of the pruning mask referring to FIG. 3B may also apply to FIG. 4, and thus, a duplicate description is omitted. Although description below refers to a pruning mask, the same description may apply to the use of a pruning vector, a pruning matrix, or the like.

In some embodiments, based on remaining weights after pruning, inference time, for example, may be predicted, as well as the amount of memory required to use the neural network, FLOPs required for calculation, etc. The apparatus may express any such prediction values of the constraint condition as a linear combination of $\|r_{in}\|_1$, which is a size or norm of a pruning binary vector of an input channel, and $\|A\|_1$, which is a size or norm of the pruning mask. Assuming neural network operations (e.g., convolution operations) are sequentially connected, a weight of each of the neural network operations (e.g., a convolution) may be expressed as $W^{(l)} \in R^{Cl\text{-}1 \times Cl \times Kl \times Kl}$ (e.g., l refers to an lth convolution and 1-1 refers to the 1-1th convolution).

Weight importance ($I^{(l)}$) and a pruning mask ($A^{(l)}$) both corresponding to a weight ($W^{(l)}$) (for, e.g., convolution 1) may be defined as $I^{(l)} \in R^{Cl\text{-}1 \times Cl \times Kl \times Kl}$ and $A^{(l)} \in \{0,1\}^{Cl\text{-}1 \times Cl \times Kl \times Kl}$, respectively. Here, the constraint condition (e.g., an amount of memory, FLOPs, and/or inference time) used by L operations/convolutions of the neural network (e.g., all convolutions of a pass) may be expressed as in Equation 7 below.

<div align="center">

## Equation 7

$$\sum_{l=0}^{L} a_l \left\| r^{(l)} \right\|_1 + \sum_{l=1}^{L} b_l \left\| A^{(l)} \right\|_1$$

</div>

In Equation 7, if a feature representation of an l-th operation/convolution of a neural network is $X^{(l)} \in R^{Cl \times Hl \times Wl}$, values of $a_l$ and $b_l$ to express resources used by the neural network may be as shown in Table 1 below.

<div align="center">

Table 1

| Resources of a neural network | $a_l$ | $b_l$ |
|---|---|---|
| Sizes of a neural network | 0 | 1 |
| Amount of memory required for a neural network | $H_l W_l$ | 0 |
| FLOPs | 0 | $H_l W_l$ |

</div>

The apparatus may express, within the constraint condition, an optimization equation for maximizing the weight importance of the neural network as in Equation 8.

<div align="center">

## Equation 8

$$\max_{r^{(0:L)}, q^{(0:L)}} \sum_{i=1}^{N} \langle I^{(l)}, A^{(l)} \rangle$$

</div>

Equation 8 may need to satisfy a condition of Equation 9 below.

<div align="center">

## Equation 9

$$\sum_{l=0}^{L} a_l \left\| r^{(l)} \right\|_1 + \sum_{l=1}^{L} b_l \left\| A^{(l)} \right\|_1 \leq M, \quad A^{(l)} = r^{(l-1)} \otimes q^{(l)}$$

</div>

The apparatus may determine a pruning mask satisfying Equations 8 and 9 using a binary vector optimization algorithm, for example. For example, the apparatus may determine the pruning mask satisfying Equations 8 and 9 based on an optimizer (e.g., Gurobi and cplex) or a greedy algorithm.

The apparatus may determine a pruning mask satisfying all conditions requested by a user (or otherwise selected) at once by maintaining a maximal number of remaining important weights without repeatedly adjusting a threshold value.

Furthermore, the apparatus may enable pruning in a form convenient for efficiently optimizing speed in an existing framework (possibly instead of a form applicable to sizes of various groups) and may perform the pruning as many times as possible, practical, or necessary, e.g., after each training (or epoch) performed previous to a subsequent pruning.

The apparatus may prune the neural network based on the determined pruning mask. The apparatus may perform an inference on a pruned neural network, may transmit the pruned neural network (which may be reduced in size) via a network, etc. The inference may also be performed by an electronic device, such as when the apparatus is such an electronic apparatus.

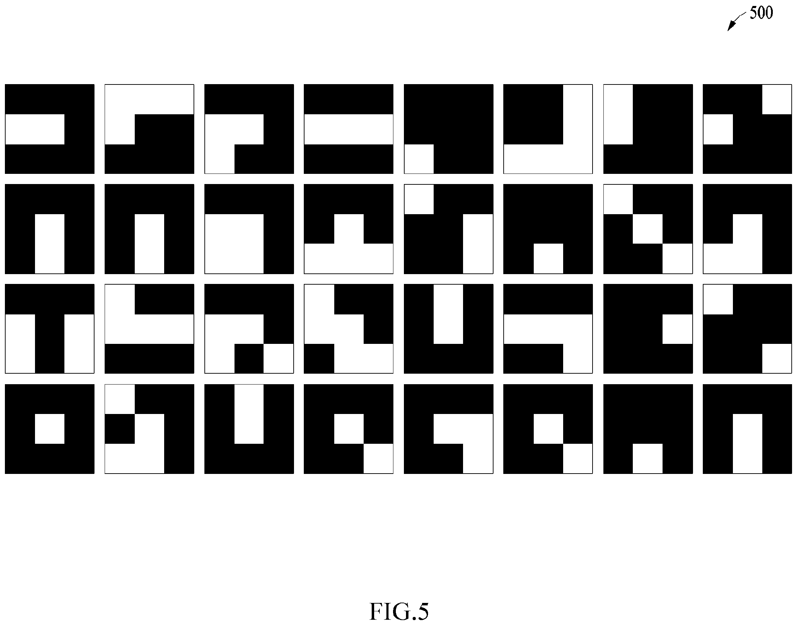

FIG. 5 illustrates an example 500 of weights pruned by a method, according to one or more embodiments.

Referring to FIG. 5, in weights pruned by the method according to an example, black may indicate non-pruned areas and white may indicate pruned areas. For example, the 3x3 matrices in FIG. 5 may be convolution weights obtained by a binary vector optimization algorithm as described above.

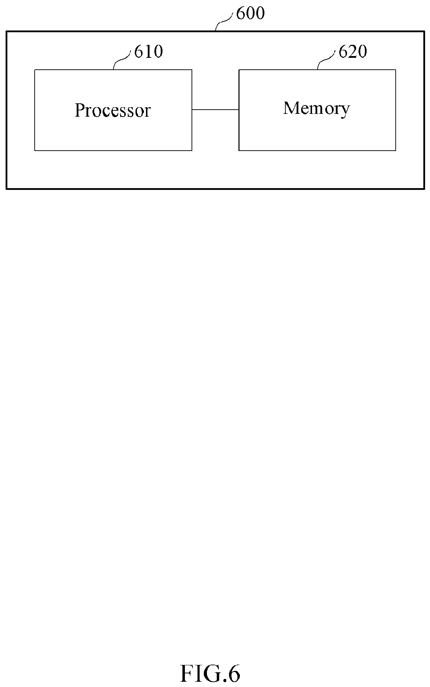

FIG. 6 illustrates an example of a hardware configuration of an apparatus, according to one or more embodiments.

Referring to FIG. 6, an apparatus 600 may include a processor 610 and a memory 620. In the example of FIG. 6, only the components related to the examples described herein are illustrated as being included in the apparatus 600. The apparatus 600 may also include other general-purpose components, in addition to the components illustrated in FIG. 6.

The apparatus 600 may be implemented as a computing device that performs pruning on a neural network. For example, the apparatus 600 may be, or may be implemented by, a PC, a service device, or a mobile device, and furthermore, an apparatus included in, for example, an autonomous vehicle, a robot, a smartphone, a tablet device, an augmented reality (AR) device, or an Internet of Things (IoT) device, which performs voice and image recognition (or similar pattern recognition) based on a neural network, but examples are not limited thereto.

The processor 610 is a hardware configuration that may perform overall control functions for controlling operations of the apparatus 600. For example, the processor 610 may generally control the apparatus 600 by executing programs (in the form of processor executable instructions, intermediate code, bytecode, interpretable/compilable source code, etc.) stored in the memory 620 in the apparatus 600. The processor 610 may be implemented as a central processing unit (CPU), a graphics processing unit (GPU), an application processor (AP), a neural processing unit (NPU), and the like, that are included in the apparatus 600, but examples are not limited thereto.

The memory 620 is hardware that may be used for storing various sets of neural network data processed in the processor 610. For example, the memory 620 may store pruning data for a neural network, data sets (e.g., training data, validation data, data for which predictions are to be performed, etc.) to be input to the neural network, and the like. In addition, the memory 620 may store various applications to be driven by the processor 610, for example, an application for neural network pruning, a neural network driving application, a driver, and the like.

The memory 620 may include at least one of a volatile memory or a nonvolatile memory and does not include signals per se. A nonvolatile memory may include a Read Only Memory (ROM), a Programmable ROM (PROM), an Electrically Programmable ROM (EPROM), an Electrically Erasable and Programmable ROM (EEPROM), a flash memory, a Phase-change random-access memory (PRAM), a Magnetic RAM (MRAM), a Resistive RAM (RRAM), a Ferroelectric RAM (FeRAM), and the like. Volatile memory may include a Dynamic RAM (DRAM), a Static RAM (SRAM), a Synchronous DRAM (SDRAM), a PRAM, an MRAM, an RRAM, an FeRAM, and the like. Furthermore, the memory 620 may include any one or any combination of a Hard Disk Drive (HDD), a Solid State Drive (SSD), a compact flash (CF), secure digital (SD), micro-SD, Mini-SD, extreme digital (xD), and a memory stick.

The computing apparatuses, the electronic devices, the processors, the memories, the image sensors, the displays, the information output system and hardware, the storage devices, and other apparatuses, devices, units, modules, and components described herein with respect to FIGS. 1-6 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-6 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

**Claims**

1. A method performed by an apparatus comprising a processor, the method comprising:

   determining weight importance of a trained neural network;
   receiving a constraint condition related to an operation resource; and
   determining, in accordance with the constraint condition, a pruning mask for maximizing the weight importance of the trained neural network.

2. The method of claim 1, wherein the determining of the pruning mask comprises:

   determining a pruning binary vector of an input channel with respect to pruning; and
   determining a spatial pruning binary vector of an output channel with respect to the pruning.

3. The method of claim 1 or 2, further comprising:

   pruning the neural network based on the pruning mask,
   preferably the method further comprising:
   performing an inference based on the pruned neural network to generate an inference result.

4. The method of claim 3, wherein the pruning of the neural network comprises:

   pruning weights of an input channel, with respect to the pruning, based on a determined pruning binary vector of the input channel; and
   pruning weights in a spatial dimension of an output channel based on a determined spatial pruning binary vector of the output channel.

5. The method of any of previous claims, wherein

   the determining of the weight importance comprises:
   expressing the weight importance as at least one of a pruning binary vector of an input channel, with respect to the pruning, or a spatial pruning binary vector of an output channel, with respect to the pruning, and
   the receiving of the constraint condition comprises:
   expressing the constraint condition as at least one of the pruning binary vector of the input channel or the spatial pruning binary vector of the output channel.

6. The method of claim 5, wherein the determining of the pruning mask comprises, in accordance with the constraint condition, expressing an optimization equation for maximizing the weight importance of the neural network as at least one of the pruning binary vector of the input channel and the spatial pruning binary vector of the output channel, wherein preferably the determining of the pruning mask comprises determining the pruning mask corresponding to the optimization equation based on a binary vector optimization algorithm.

7. The method of any of previous claims, wherein the determining of the weight importance comprises determining the weight importance based an absolute value of a weight of the neural network and/or an absolute value of a gradient of an error.

8. A non-transitory computer-readable storage medium storing instructions that, when executed by a processor, cause the processor to perform the method of any of previous claims.

9. An electronic apparatus comprising:

   a processor; and
   a memory storing instructions executable by the processor,
   wherein the processor is configured to, in response to executing the instructions:

   determine weight importance of a trained neural network;
   receive a constraint condition related to an operation resource; and
   determine, in accordance with the constraint condition, a pruning mask for maximizing the weight importance of the trained neural network.

10. The electronic apparatus of claim 9, wherein the processor is further configured to:

determine a pruning binary vector of an input channel; and
determine a spatial pruning binary vector of an output channel.

11. The electronic apparatus of claim 9 or 10, wherein the processor is further configured to prune the neural network based on the pruning mask, wherein preferably the processor is configured to perform inference based on the pruned neural network.

12. The electronic apparatus of claim 11, wherein the processor is further configured to:

prune weights of an input channel based on a determined pruning binary vector of the input channel; and
prune weights in a spatial dimension of an output channel based on a determined spatial pruning binary vector of the output channel.

13. The electronic apparatus of any one of claims 9 to 12, wherein the processor is configured to:

express the weight importance as at least one of a pruning binary vector of an input channel or a spatial pruning binary vector of an output channel; and
express the constraint condition as at least one of the pruning binary vector of the input channel or the spatial pruning binary vector of the output channel.

14. The electronic apparatus of claim 13, wherein the processor is further configured to, in accordance with the constraint condition, to express an optimization equation for maximizing the weight importance of the neural network as at least one of the pruning binary vector of the input channel or the spatial pruning binary vector of the output channel,

wherein preferably the processor is further configured to determine the pruning mask corresponding to the optimization equation based on a binary vector optimization algorithm, and/or
wherein preferably the processor is further configured to determine the weight importance based on an absolute value of a weight of the neural network and/or an absolute value a gradient of an error.

15. The electronic apparatus of any one of claims 9 to 14, wherein the weight importance comprises a value corresponding to one or more weights in the trained neural network, and wherein the value corresponds to the one or more weight's effect on accuracy of the trained neural network.

FIG.1

FIG.2A

EP 4 231 203 A1

230

| 0.9 | 0 | 0 | 0.6 | 0.7 | 1.2 |
|---|---|---|---|---|---|
| 1.2 | 1.3 | 1.1 | 1.0 | 0 | 1.1 |
| 1.4 | 1.3 | 1.3 | 0 | 0.2 | 0.5 |
| 1.0 | 0.2 | 0 | 0.1 | 0.1 | 0.2 |
| 0.1 | 0 | 0.1 | 0.2 | 0 | 0 |
| 0.1 | 0.2 | 0 | 0.1 | 0 | 0.2 |

KERNEL$_{n\_k}$

Pruning

(For example, weight threshold value $\tau$=0.5)

240

| 0.9 | 0 | 0 | 0.6 | 0.7 | 1.2 |
|---|---|---|---|---|---|
| 1.2 | 1.3 | 1.1 | 1.0 | 0 | 1.1 |
| 1.4 | 1.3 | 1.3 | 0 | 0 | 0 |
| 1.0 | 0 | 0 | 0 | 0 | 0 |
| 0 | 0 | 0 | 0 | 0 | 0 |
| 0 | 0 | 0 | 0 | 0 | 0 |

KERNEL$_{n\_k}$

FIG.2B

RELATED ART

FIG.3A

FIG.3B

FIG.4

FIG.5

FIG.6

Europäisches
Patentamt

European
Patent Office

Office européen
des brevets

# EUROPEAN SEARCH REPORT

Application Number

EP 23 15 0415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jeong Yeonwoo ET AL: "SUCCINCT NETWORK CHANNEL AND SPATIAL PRUN- ING VIA DISCRETE VARIABLE QCQP", , 2 October 2020 (2020-10-02), XP093049502, Retrieved from the Internet: URL:https://openreview.net/references/pdf?id=igmh1nswA [retrieved on 2023-05-25] * Sections 3 and 5 * ----- | 1-15 | INV. G06N3/0495 G06N3/082 |
| A | NAMHOON LEE ET AL: "SNIP: Single-shot Network Pruning based on Connection Sensitivity", ARXIV.ORG, CORNELL UNIVERSITY LIBRARY, 201 OLIN LIBRARY CORNELL UNIVERSITY ITHACA, NY 14853, 4 October 2018 (2018-10-04), XP081019993, * Section 4 * ----- | 7,15 | |

TECHNICAL FIELDS SEARCHED (IPC)

G06N

The present search report has been drawn up for all claims

| Place of search | Date of completion of the search | Examiner |
|---|---|---|
| The Hague | 25 May 2023 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................
& : member of the same patent family, corresponding document

EPO FORM 1503 03.82 (P04C01)